# EUROPEAN PATENT APPLICATION

(11) **EP 4 701 162 A1**
(43) Date of publication of application: **25.02.2026**
(21) Application number: 24806125.1
(22) Date of filing: 20.02.2024
(51) Int. Cl.: H04L 67/51

(54) **CROSS-CLUSTER SERVICE ACCESS METHOD, AND APPARATUS**

(30) Priority: 12.05.2023 CN 202310539823; 12.10.2023 CN 202311324854
(71) Applicant: Huawei Cloud Computing Technologies Co., Ltd., Guiyang, Guizhou 550025 (CN)
(72) Inventor: ZHU, Na, Guiyang, Guizhou 550025 (CN); YAO, Bo, Guiyang, Guizhou 550025 (CN); YANG, Yi, Guiyang, Guizhou 550025 (CN); ZHANG, Caizheng, Guiyang, Guizhou 550025 (CN)
(74) Representative: Epping - Hermann - Fischer
(86) International application number: PCT/CN2024/077764
(87) International publication number: WO 2024/234764

(57) **Abstract**

This application provides a method for cross-cluster service access and a computing apparatus. A tenant configures a created cluster group, and a gateway may send third configuration information to each application gateway, so that when receiving a service access request of a client in a first cluster, a first application gateway may directly forward, based on the obtained third configuration information, the service access request to an application gateway corresponding to another cluster. In this way, it is ensured that the tenant can access a service in the another cluster, to implement automatic access between services in a plurality of clusters, thereby facilitating management and reducing management costs.

## Description

This application claims priority to Chinese Patent Application No. 202310539823.0, filed with the China National Intellectual Property Administration on May 12, 2023 and entitled "METHOD AND APPARATUS FOR AUTOMATIC DISCOVERY OF CROSS-CONTAINER CLUSTER SERVICE AND AUTOMATIC NETWORK INTERWORKING", which is incorporated herein by reference in its entirety.

This application claims priority to Chinese Patent Application No. 202311324854.0, filed with the China National Intellectual Property Administration on October 12, 2023 and entitled "METHOD FOR CROSS-CLUSTER SERVICE ACCESS AND APPARATUS", which is incorporated herein by reference in its entirety.

### TECHNICAL FIELD

This application relates to the field of container application technologies, and more specifically, to a method for cross-cluster service access and an apparatus.

### BACKGROUND

K8s is a lightweight and scalable open-source platform for managing containerized applications and services. K8s enables automatic deployment and scaling of applications. K8s combines containers included in an application into a logical unit for easy management and discovery. K8s has properly resolved a problem of access between services (which may also be understood as applications) in a single cluster. However, K8s does not provide an automatic solution for access between services in a plurality of clusters. Currently, configuration can be performed only manually. The configuration is highly complex and inconvenient to manage, and errors may easily occur. Currently, an open-source service grid project supports cross-K8s cluster service access but is implemented in a sidecar (sidecar) manner. A sidecar container is deployed in each pod. Access between services in different clusters is forwarded to the sidecar container in an agent mode. Service governance is performed in the sidecar container. However, sidecar resource usage is high and management costs are high.

Therefore, a method for cross-cluster service access is needed, to implement automatic access between services in a plurality of clusters, thereby facilitating management and reducing management costs.

### SUMMARY

This application provides a method for cross-cluster service access, to implement automatic access between services in a plurality of clusters, thereby facilitating management and reducing management costs.

According to a first aspect, a method for cross-cluster service access is provided. The method may be applied to a cloud service system. The method may be performed by a cloud management platform (or an apparatus in a cloud management platform), or may be performed by a component (for example, a chip or a circuit) of a cloud management platform (or an apparatus in a cloud management platform).

In this application, the cloud service system includes a plurality of clusters, each cluster at least includes a client and at least one worker node, each worker node includes at least one pod, and each pod is configured to provide a service.

The method includes: receiving first configuration information from a tenant, where the first configuration information indicates to create a cluster group for the plurality of clusters; creating the cluster group based on the first configuration information, where the cluster group includes the plurality of clusters; receiving second configuration information from the tenant, where the second configuration information indicates to create a gateway in the cluster group; creating the gateway in the cluster group based on the second configuration information; receiving third configuration information from the tenant, where the third configuration information includes: a first mapping relationship between a service name corresponding to a service included in each cluster and a corresponding access address, a second mapping relationship between the service name corresponding to the service included in each cluster and corresponding cluster information, and a third mapping relationship between each cluster and an application gateway, where the cluster information determines the cluster; and configuring the third configuration information to the gateway, where the gateway is configured to send the third configuration information to the application gateway corresponding to each cluster, and the application gateway is configured to perform service access based on a request message of the client and the third configuration information.

In this application, the access address corresponding to the service includes one or more of the following: a domain name corresponding to the service, a uniform resource locator URL corresponding to the service, and an Internet Protocol IP address corresponding to the service. The "cluster" in this application may be, for example, a K8s cluster.

In this application, for example, the "cluster information" may include: a name of the cluster, a name of the worker node in the cluster, and a name of the pod on the worker node.

Based on the foregoing technical solutions, this application provides a method for cross-cluster service access and a computing apparatus. The tenant configures the created cluster group, and the gateway may send the third configuration information to each application gateway, so that when receiving a service access request of a client in a first cluster, a first application gateway may directly forward, based on the obtained third configuration information, the service access request to an application gateway corresponding to another cluster, thereby ensuring that the tenant can access a service in the another cluster. In this application, the tenant performs configuration in the clusters, so that automatic service access between different clusters is implemented, that is, automatic network connection between the clusters is implemented. In comparison with a manner in which a tenant statically and manually configures a network, this manner is more convenient, improves service experience of a user, and avoids using a sidecar to implement cross-cluster service access, thereby facilitating management and reducing management costs.

In a possible implementation, the plurality of clusters include a first cluster and a second cluster, the first cluster includes a first client, and the first cluster is associated with a first application gateway. The method further includes: The first client obtains a first IP address corresponding to a first domain name; the first client sends a first request message to the first application gateway, where the first request message carries the first IP address, and the first request message is used to request to access the first IP address; the first application gateway determines, based on the first request message and the first mapping relationship, that a service identifier corresponding to the first IP address is a first identifier, determines, based on the second mapping relationship, that the first identifier is an identifier corresponding to a service in the second cluster, and determines, based on the third mapping relationship, that the second cluster is associated with a second application gateway; and the first application gateway sends the first request message to the second application gateway.

In a possible implementation, the gateway sends the third configuration information to the first application gateway and the second application gateway.

For example, the gateway may deliver, based on triggering of a service access request message of a client in a specific cluster in the cluster group, the third configuration information to the application gateway corresponding to each cluster.

For example, the gateway may send all of the third configuration information to the application gateway corresponding to each cluster.

For example, the gateway may determine, based on a service access request message of a client, configuration information that needs to be delivered and application gateways to which the required configuration information needs to be delivered. For example, if the gateway determines, based on a service access request message of a client, that the service access request is a request of a client in a cluster #1 to access a service #C in a cluster #2, the gateway may send configuration information #1 related to the service #C to only an application gateway #1 corresponding to the cluster #1 and an application gateway #2 corresponding to the cluster #2, where the configuration information #1 is partial configuration information in the third configuration information.

In a possible implementation, the method further includes: The second application gateway determines, based on the first IP address carried in the first request message and the first mapping relationship, that the service identifier corresponding to the first IP address is the first identifier, and determines, based on the second mapping relationship, that the first identifier corresponds to a second pod in a second worker node in the second cluster; and the second application gateway sends a second request message to the second pod, where the second request message is used to request to access the service corresponding to the first identifier.

In a possible implementation, the first cluster further includes a first module, a fourth mapping relationship between the domain name and the IP address is configured on the first module, and the first module is configured to perform domain name resolution. That the first client obtains the first IP address corresponding to the first domain name includes: The first client sends a third request message to the first module, where the third request message carries the first domain name, and the third request message is used to request to obtain an Internet Protocol IP address corresponding to the first domain name; and the first client receives a first response message from the first module, where the first response message carries the first IP address, and the first IP address is determined by the first module.

In this application, the first module may be an extended module, for example, may be an operator module.

Based on the foregoing technical solutions, in this application, the first module may implement domain name resolution, and the application gateway may send the service access request to a gateway corresponding to another cluster, thereby implementing cross-cluster service access.

According to a second aspect, this application provides an apparatus, where the apparatus is configured to perform the method in the first aspect. Specifically, the apparatus may include units and/or modules configured to perform a method for cross-cluster service accessmethod for cross-cluster service accessprovided in this application, for example, a transceiver unit and/or a processing unit. In this application, the apparatus is applied to a cloud management platform. Alternatively, the apparatus is a cloud management platform.

According to a third aspect, this application provides an apparatus. The apparatus includes: at least one processor, configured to execute a computer program or instructions stored in a memory, to perform the method in the first aspect. Optionally, the apparatus further includes the memory, configured to store the computer program or the instructions. Optionally, the apparatus further includes a communication interface, and the processor reads, via the communication interface, the computer program or the instructions stored in the memory.

In an implementation, the apparatus is an apparatus that is used in a chip to implement functions of the foregoing method for cross-cluster service accessmethod for cross-cluster service accessand that is applied to a cloud management platform. Alternatively, the apparatus is a cloud management platform.

In another implementation, the apparatus is a chip, a chip system, or a circuit that is used in a chip to implement the functions of the foregoing method for cross-cluster service accessmethod for cross-cluster service accessand that is applied to a cloud management platform.

According to a fourth aspect, this application provides a processor, including an input circuit, an output circuit, and a processing circuit. The processing circuit is configured to receive a signal by using the input circuit, and transmit a signal by using the output circuit, so that the processor performs the method in the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, including but not limited to, a transceiver. A signal output by the output circuit may be output to, for example, including but not limited to, a transmitter and transmitted by the transmitter. The input circuit and the output circuit may be a same circuit, where the circuit is used as the input circuit and the output circuit separately at different moments. Specific implementations of the processor and the circuits are not limited in embodiments of this application.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or may be understood as operations such as sending and receiving performed by a radio frequency circuit and an antenna. This is not limited in this application. According to a fifth aspect, a processing device is provided, including a processor and a memory. The processor is configured to read instructions stored in the memory, receive a signal by using a transceiver, and transmit a signal by using a transmitter, to perform the method in the first aspect. Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device according to the fifth aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be disposed outside the processor and exist independently.

According to a sixth aspect, this application provides a computing device cluster, including at least one computing device. Each computing device includes a processor and a memory. The processor of the at least one computing device is configured to execute instructions stored in the memory of the at least one computing device, so that the computing device cluster performs the method in any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be disposed outside the processor and exist independently.

According to a seventh aspect, a computer-readable storage medium is provided. The computer-readable storage medium stores program code for a device to execute, and the program code is configured to perform the method in the first aspect.

According to an eighth aspect, a computer program product including instructions is provided. When the computer program product is run on a computer, the computer is enabled to perform the method in the first aspect.

According to a ninth aspect, a chip system is provided, including a processor, configured to invoke and run a computer program from a memory so that a device in which the chip system is installed performs the method in the first aspect.

According to a tenth aspect, a cloud service system is provided. The cloud service system includes a cloud management platform, and a computing node and/or a network node. The cloud management platform is configured to perform the method in any one of the possible implementations of the first aspect. The computing node is configured to perform related actions of a first client, a first application gateway, and a second application gateway.

### BRIEF DESCRIPTION OF DRAWINGS

FIG. 1 is a diagram of a K8s cluster architecture according to this application;
FIG. 2 is a diagram of a cloud service scenario to which this application is applicable;
FIG. 3 is a schematic flowchart of a method 300 for cross-cluster service access according to this application;
FIG. 4 is another schematic flowchart of a method for cross-cluster service access according to this application;
FIG. 5 is still another schematic flowchart of a method for cross-cluster service access according to this application;
FIG. 6 is another diagram of a K8s cluster architecture according to this application;
FIG. 7 is still another diagram of a K8s cluster architecture according to this application;
FIG. 8A and FIG. 8B are diagrams of a system architecture to which this application is applicable;
FIG. 9 is a block diagram of an apparatus 900 according to this application;
FIG. 10 is a block diagram of an apparatus 1000 according to this application;
FIG. 11 is a diagram of an architecture of a computing apparatus cluster according to this application; and
FIG. 12 is a diagram of connection between computing apparatuses 1200A and 1200B via a network according to this application.

### DESCRIPTION OF EMBODIMENTS

The following describes technical solutions of this application with reference to the accompanying drawings.

### 1. K8s

K8s (Kubernetes) is an example of a distributed system having a proper architecture. It treats each machine in a cluster as a part of a single resource pool. K8s has two layers: a master node (master) and a worker node (node). The master node or main node includes a control plane and worker node applications. A K8s cluster includes many master nodes and worker nodes.

During physical division of K8s, hosts are classified into two types: a master node and a node (node). The master node mainly performs functions such as cluster resource scheduling and control. The node (node) is mainly a node used for running a container, namely, a node used for running a service. The master stores various metadata. The node (node) is a worker node, and is mainly used for running various services. The node (node) communicates with the master node at regular time, and reports information via a kubelet process.

### 2. Pod

A pod is a minimum unit created or deployed in K8s. One pod represents a process that is running in a cluster. One pod includes one or more containers. The containers in the pod share network, storage, and computing resources, and run on a same docker host. A plurality of containers may run in one pod. In a production environment, generally a single container forms a pod, or a plurality of containers that are closely associated with and complementary to each other form a pod. One pod can run on only one host, but there may be a plurality of pods on one host.

### 3. Container

A container is a runnable software package, which contains a complete executable program, including: code, a run-time application and a system library, and default values of all important settings. In the container, the application runs in an independent environment. This environment is usually provided by a container engine. Containers use a kernel of a host system. An application and dependencies of the application are packaged together to run as a container. Resources are shared between the containers and the host system. Therefore, the containers are usually more lightweight than virtual machines, and it is easier to start and stop the containers.

### 4. Service (service)

In a K8s cluster, although an independent Internet Protocol (Internet protocol, IP) address is allocated to each pod, the pod has a life cycle (the pod may be created and is no longer started after being destroyed) and the IP address may also disappear at any time as the pod is destroyed due to a service change.

A "service" is used just to resolve this problem. A service in K8s may be understood as a gateway layer, and may be considered as an external access interface and a traffic balancer for a group of pods that provide the same service. A service that a client needs to access is a service object. Each service has a fixed virtual IP address, which may be automatically and dynamically bound to a back-end pod. For all network requests of the service, the virtual IP address of the service is directly accessed, and the service automatically forwards the requests to a back end. In addition to providing a stable external access manner, the service further provides a load balancing (load balance) function. Request traffic is automatically distributed to all services at the back end. The service may perform horizontal scaling, which is transparent to a customer.

As a core of the K8s service, the service shields service details and externally presents a service interface in a unified manner, thereby really implementing a "micro service". For example, three replicas, which mean three pods, are deployed for a service #A, and a tenant needs to pay attention to only one ingress of the service and does not need to care about which pod should be exactly requested. This has the following advantages: The external tenant does not need to be aware of an IP address change caused by unexpected failure of a service on a pod or pod restart by K8s; and the external tenant does not need to be aware of an IP address change caused by pod replacement due to upgrade or a service change.

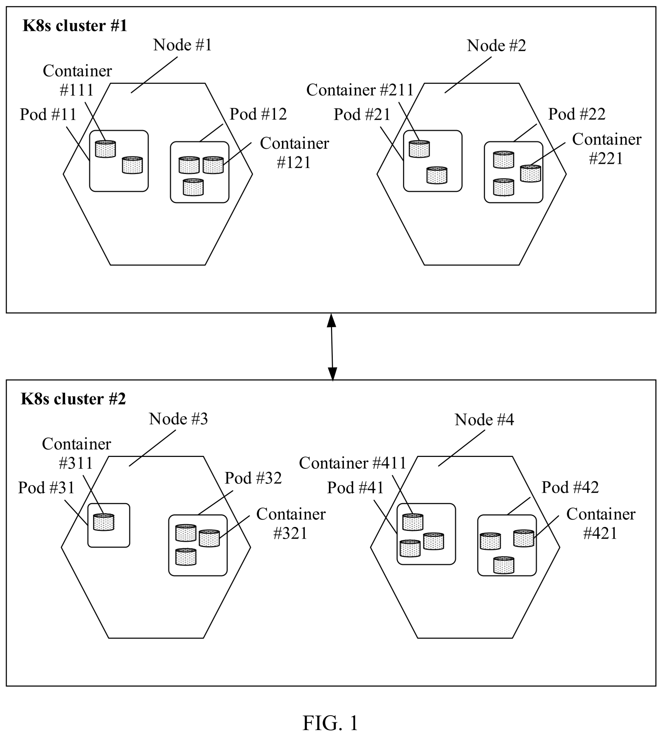

FIG. 1 is a diagram of an internal system architecture of K8s according to this application. FIG. 1 shows two K8s clusters, and a K8s cluster #1 is used as an example for description. The cluster includes two worker nodes: a node #1 and a node #2. The node #1 includes two pods: a pod #11 and a pod #12. The pod #11 includes two containers, and one of the containers is a container #111. The pod #12 includes three containers, and one of the containers is a container #121. The node #2 in the K8s cluster #1 may be understood in a similar manner, and the K8s cluster #2 may be understood in a similar manner. Details are not described again. Currently, access between services in a plurality of clusters may be implemented by manually configuring information such as an IP address of a gateway. The configuration is highly complex and inconvenient to manage, and errors may easily occur. In other words, a network between nodes in different clusters cannot be automatically connected, and manual configuration is needed instead. For example, a network between the node #1 in the K8s cluster #1 and a node #3 in the K8s cluster #2 in FIG. 1 cannot be automatically connected, and some IP address information needs to be manually configured to implement cross-cluster service access.

In view of this, this application provides a service access method, to implement automatic access between services in different K8s clusters, and implement automatic network connection between the K8s clusters. In comparison with a manner in which a tenant statically and manually configures a network, this method is more convenient, improves user service experience, and avoids using a sidecar to implement cross-cluster service access, thereby facilitating management and reducing management costs

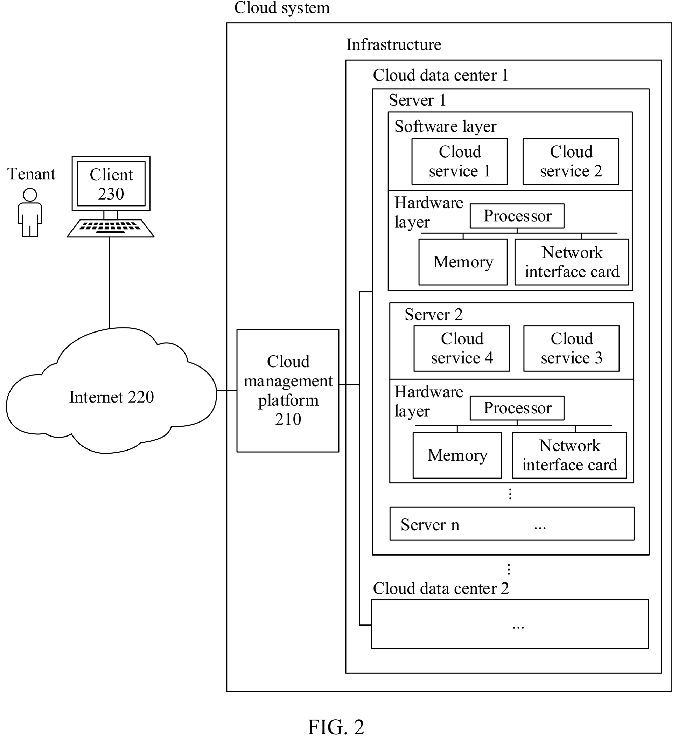

The method for cross-cluster service accessmethod for cross-cluster service accessprovided in embodiments of this application may be applied to a cloud service scenario, and a cloud management platform in the cloud service scenario performs the method. The following first describes a cloud service scenario in detail with reference to FIG. 2.

FIG. 2 is a block diagram of a cloud service scenario to which an embodiment of this application is applicable. As shown in FIG. 2, the cloud service scenario may include: a cloud management platform 210, an Internet 220, and a client 230.

As shown in FIG. 2, the cloud management platform 210 is configured to manage infrastructure that provides a plurality of cloud services. The infrastructure includes a plurality of cloud data centers, each cloud data center includes a plurality of servers, and each server includes a cloud service resource to provide a corresponding cloud service for a tenant. In this embodiment of this application, the cloud service resource may be a cloud database.

The cloud management platform 210 may be arranged in a cloud data center, and may provide an access interface (for example, an interface or an application programming interface (application programming interface, API)). The tenant may operate a remote access interface of the client 230 to register a cloud account and a password on the cloud management platform 210, and log in to the cloud management platform 210. After the cloud management platform 210 successfully authenticates the cloud account and the password, the tenant may further pay on the cloud management platform 210 to select and purchase a virtual machine with a specific specification (a processor, a memory, or a disk). After the payment and purchase are successful, the cloud management platform 210 provides a remote login account and a password of the purchased virtual machine, and the client 230 may remotely log in to the virtual machine, and install and run an application of the tenant in the virtual machine. Therefore, the tenant may create, manage, log in to, and operate a virtual machine in the cloud data center by using the cloud management platform 210.

Functions of the cloud management platform 210 include, but are not limited to, a tenant console, a computing management service, a network management service, a storage management service, an authentication service, and an image management service. The tenant console provides an interface or an API to interact with the tenant. The computing management service is used to manage servers and bare metal servers running virtual machines and containers. The network management service is used to manage network services (such as gateways and firewalls). The storage management service is used to manage storage services (such as data bucket services). The authentication service is used to manage tenant accounts and passwords. The image management service is used to manage virtual machine images. The tenant may log in to the cloud management platform 210 by using the client 230 over the Internet 220, to manage a leased cloud service.

In this application, the K8s cluster may be deployed on a public cloud, a private cloud, or a conventional data center, or a physical machine. This is not limited.

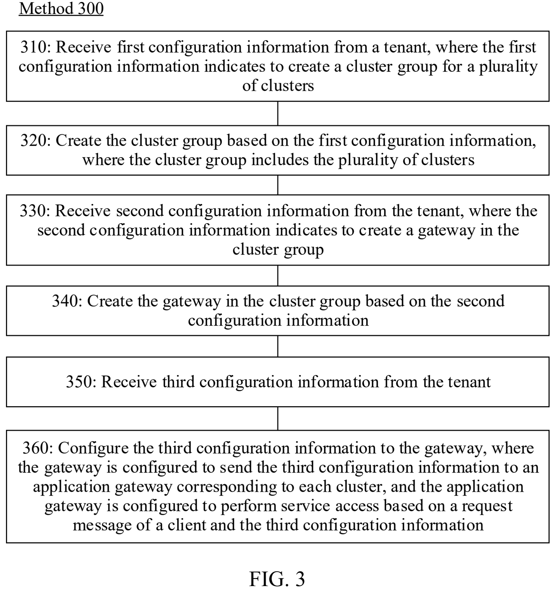

FIG. 3 is a schematic flowchart of a method 300 for cross-cluster service access according to this application. For example, the method may be performed by the cloud management platform in the cloud service system shown in FIG. 2. As described previously, the cloud service system includes a plurality of clusters, each cluster at least includes a client and at least one worker node, each worker node includes at least one pod, and each pod is configured to provide a service. As shown in FIG. 3, the method includes the following steps.

310: Receive first configuration information from a tenant, where the first configuration information indicates to create a cluster group for a plurality of clusters.

The "cluster" in this application may be understood as, for example, a K8s cluster.

In a possible implementation, the first configuration information includes names of the plurality of clusters entered by the tenant.

For example, the cloud management platform may receive the first configuration information from the tenant. It is assumed that, a name of one cluster may be denoted as a cluster #1, a name of another cluster may be denoted as a cluster #2, and a name of still another cluster may be denoted as a cluster #3 or the like.

320: Create the cluster group based on the first configuration information, where the cluster group includes the plurality of clusters.

For example, the cloud management platform may create a "clusterset" for the tenant based on the first configuration information, where the clusterset represents a cluster group. The cluster group includes the clusters deployed by the tenant. In other words, the clusters deployed by the tenant may be added to the cluster group.

330: Receive second configuration information from the tenant, where the second configuration information indicates to create a gateway in the cluster group.

For example, the cloud management platform may receive the second configuration information from the tenant.

340: Create the gateway in the cluster group based on the second configuration information.

For example, the cloud management platform may create the gateway in the cluster group based on the second configuration information.

In this application, for example, an advanced traffic governance policy may be configured on the gateway.

350: Receive third configuration information from the tenant.

In this application, the third configuration information includes: a first mapping relationship between a service name corresponding to a service included in each cluster and an access address corresponding to the service, a second mapping relationship between the service name corresponding to the service included in each cluster and cluster information corresponding to the service, and a third mapping relationship between each cluster and an application gateway.

In this application, the cluster information may determine the cluster. In other words, the cluster may be determined based on the cluster information.

For example, the cluster information may include: a name of the cluster, a name of the worker node in the cluster, and a name of the pod on the worker node.

In this application, for example, the access address corresponding to the service may be a domain name corresponding to the service. For another example, the access address corresponding to the service may be a uniform resource locator URL corresponding to the service. For still another example, the access address corresponding to the service may be an Internet Protocol IP address corresponding to the service.

The following separately describes the mapping relationships included in the third configuration information.

For example, the tenant may enter the service name corresponding to the service included in each K8s cluster and the access address corresponding to the service. For example, the tenant deploys two K8s clusters: a K8s cluster #1 and a K8s cluster #2. The K8s cluster #1 includes two services, which are denoted as a service #A and a service #B. The K8s cluster #2 includes one service, which is denoted as a service #C. An example is that the access address is a domain name. It is assumed that a domain name of the service #A is a domain name #1, a domain name of the service #B is a domain name #2, and a domain name of the service #C is a domain name #3. An example is that the access address is a URL. It is assumed that a URL of the service #A is a URL#1, a URL of the service #B is a URL#2, and a URL of the service #C is a URL#3. An example is that the access address is an IP address. An IP address of the service #A is an IP address #1, an IP address of the service #B is an IP address #2, and an IP address of the service #C is an IP address #3. For example, the first mapping relationship may be in a form of a table, as shown in Table 1.

**Table 1**

| Service name | Access address |
|---|---|
| Service #A | Domain name #1, URL #1, IP address #1 |
| Service #B | Domain name #2, URL #2, IP address #2 |
| Service #C | Domain name #3, URL #3, IP address #3 |

The first mapping relationship in this application may also be understood as a routing rule configured by the tenant. For example, a Hypertext Transfer Protocol (Hypertext Transfer Protocol, HTTP) route (route) represents a Layer-7 routing rule, a Transmission Control Protocol (Transmission Control Protocol, TCP) route or a User Datagram Protocol (User Datagram Protocol, UDP) represents Layer-4 routing rule, a Transport Layer Security Protocol (Transport Layer Security, TLS) represents a route of an encryption rule, and an HTTP2-based protocol (Google Remote Procedure Call Protocol, gRPC) released by Google represents a gRPC protocol routing specification. In this application, a destination of a route is a service imported into the cluster group. As described previously, a "service" is actually provided by a pod on a specific node in a specific cluster. Therefore, a service in each cluster may be located to a specific pod that provides the service. For example, it is assumed that the service #A is provided by a pod #11 on a node (node) #1 in the K8s cluster #1, the service #B is provided by a pod #21 on a node (node) #2 in the K8s cluster #1, and the service #C is provided by a pod #31 on a node (node) #3 in the K8s cluster #2. For example, the second mapping relationship may be in a form of a table, as shown in Table 2.

**Table 2**

| Service name | Access address |
|---|---|
| Service #A | K8s cluster #1-Node (node) #1-Pod #11 |
| Service #B | K8s cluster #1-Node (node) #2-Pod #21 |
| Service #C | K8s cluster #2-Node (node) #3-Pod #31 |

In this application, the "cluster information" may include, for example, the name of the cluster, the name of the worker node in the cluster, and the name of the pod on the worker node. Alternatively, the "cluster information" may include the name of the cluster, an address of the worker node in the cluster, and an address of the pod on the worker node. Alternatively, the second mapping relationship may be understood as learning, through the second mapping relationship, that a specific service is specifically provided by a specific pod on a specific node in a specific cluster. It should be noted that a plurality of pods may provide a same service. For example, the service #A may be provided by the pod #11 and a pod #12 on the node #1.

It should be noted that, in this application, each cluster has a corresponding application gateway, and the application gateway provides routes for service access requests of a client in the corresponding cluster. For example, it is assumed that an application gateway corresponding to the K8s cluster #1 is an application gateway #1, an application gateway corresponding to the K8s cluster #2 is an application gateway #2, and an application gateway corresponding to a K8s cluster #3 is an application gateway #3. For example, the third mapping relationship may be in a form of a table, as shown in Table 3 below.

**Table 3**

| Cluster | Application gateway |
|---|---|
| K8s cluster #1 | Application gateway #1 |
| K8s cluster #2 | Application gateway #2 |
| K8s cluster #3 | Application gateway #3 |

It may also be understood that an address of the application gateway corresponding to each K8s cluster may be obtained based on the third mapping relationship.

360: Configure the third configuration information to the gateway, where the gateway is configured to send the third configuration information to the application gateway corresponding to each cluster, and the application gateway is configured to perform service access based on a request message of the client and the third configuration information.

For example, the gateway may deliver, based on triggering of a service access request message of a client in a specific cluster in the cluster group, the third configuration information to the application gateway corresponding to each cluster.

In a possible implementation, the gateway may send all of the third configuration information to the application gateway corresponding to each cluster.

In another possible implementation, the gateway may determine, based on a service access request message of a client, configuration information that needs to be delivered and application gateways to which the required configuration information needs to be delivered. For example, if the gateway determines, based on a service access request message of a client, that the service access request is a request of the client in the cluster #1 to access the service #C in the cluster #2, the gateway may send configuration information #1 related to the service #C to only the application gateway #1 corresponding to the cluster #1 and the application gateway #2 corresponding to the cluster #2, where the configuration information #1 is partial configuration information in the third configuration information.

It should be noted that a global controller and various local controllers are further configured in this application. The global controller is connected to the gateway, and when the tenant uses a service of a cluster for access, the third configuration information is distributed to each local controller. The local controller may manage a cluster nearby. One local controller manages one or more sites. The local controller receives the configuration information from the global controller, and delivers the configuration information to the corresponding cluster and the corresponding application gateway.

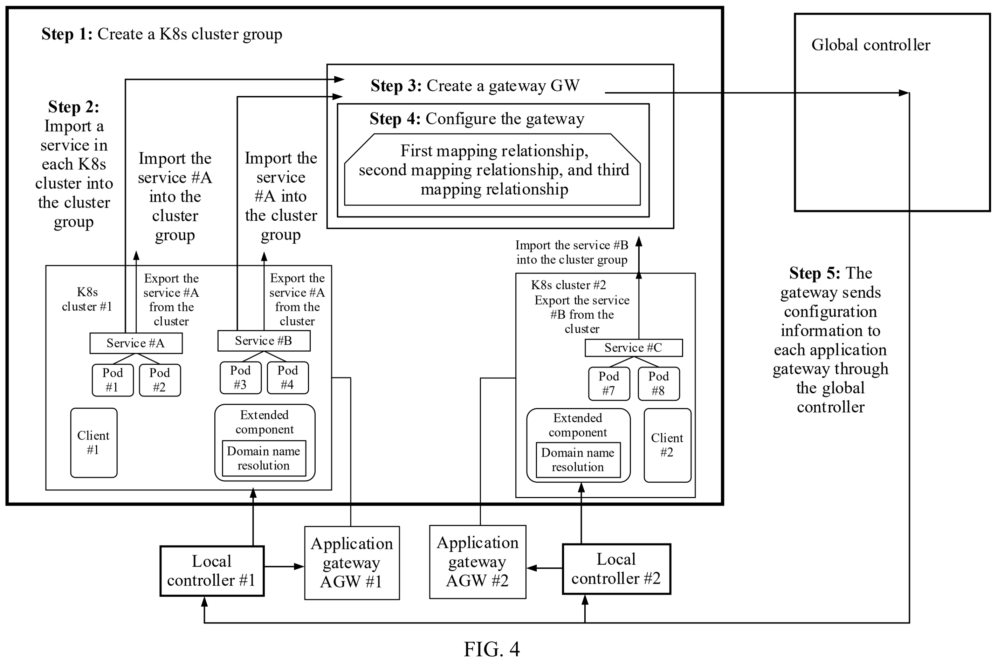

In the method 300, mainly a process of configuration performed by the tenant is described. The process of configuration performed by the tenant may alternatively be understood with reference to FIG. 4. As shown in FIG. 4, the method includes the following steps.

Step 1: Create a K8s cluster group.

For example, a clusterset representing a cluster group may be created, and a K8s cluster #1 and a K8s cluster #2 deployed by a tenant are added to the cluster group.

Step 2: Import a service in each K8s cluster into the cluster group.

For example, the service included in each K8s cluster may first be exported (service export), and then the service is imported (service import) into the cluster group. For example, a service #A and a service #B in the cluster #1 may be separately exported from their respective clusters, and then imported into the cluster group.

Step 3: Create a gateway in the cluster group.

Step 4: Configure the gateway.

As described previously, the first mapping relationship, the second mapping relationship, and the third mapping relationship may be configured on the gateway. Specifically, for specific content of the first mapping relationship to the third mapping relationship, refer to the description in step 350 in the method 300. Details are not described again.

Step 5: The gateway sends configuration information to each application gateway through a global controller.

For example, when a client in a specific K8s cluster has a service access request, the gateway sends configuration information to the global controller; the global controller sends the configuration information to each local controller; and each local controller sends the configuration information to a corresponding application gateway.

In the method 300, the process of configuration performed by the tenant is described. The following begins to describe how to implement cross-cluster service access based on the configuration performed by the tenant.

In this application, an extended component is deployed in each K8s cluster. The extended component is configured to perform domain name resolution, and a fourth mapping relationship between the domain name and the IP address is configured on the extended component. For example, the extended component may be "operator".

It is assumed that a client #1 (an example of a first client) in a K8s cluster #1 needs to access a service #C. In this case, the client #1 may first send a request message #1 (an example of a third request message) to the extended component. The request message #1 carries a domain name (an example of a first domain name) of the service #C, and the request message #1 is used to request to obtain an IP address corresponding to the service #C. After receiving the request message, the extended component determines, based on the configured fourth mapping relationship, that the IP address corresponding to the service #C is an IP address #1, and sends a response message #1 (an example of a first response message) to the client #1. The response message #1 carries the IP address #1 corresponding to the service #C.

For example, after obtaining the IP address corresponding to the service #C, the client #1 sends a request message #2 (an example of a first request message) to an application gateway #1. The request message #2 carries the IP address #1, and the request message #2 is used to request to access this IP address. A first application gateway #1 determines, based on the received request message #2, that an identifier of a service corresponding to the IP address #1 is the service #C, configuration information #1 (for example, including the first mapping relationship, the second mapping relationship, and the third mapping relationship) received from the gateway, and the first mapping relationship; and determines, based on the second mapping relationship, that the service #C is located in a K8s cluster #2; and determines, based on the third mapping relationship, that the K8s cluster #2 is associated with an application gateway #2 (an example of the second application gateway). Therefore, the application gateway #1 may send the request message #2 to the application gateway #2. The application gateway #2 determines, based on the IP address #1 carried in the request message #2 and the first mapping relationship, that the service corresponding to the IP address is the service #C; and determines, based on the second mapping relationship, that the service #C is provided by a pod #7 (a second pod) on a node (node) #4 (an example of a second worker node) in the cluster #2. Therefore, the application gateway #2 sends a request message #3 (an example of a second request message) to the pod #7 to request to access the service #C.

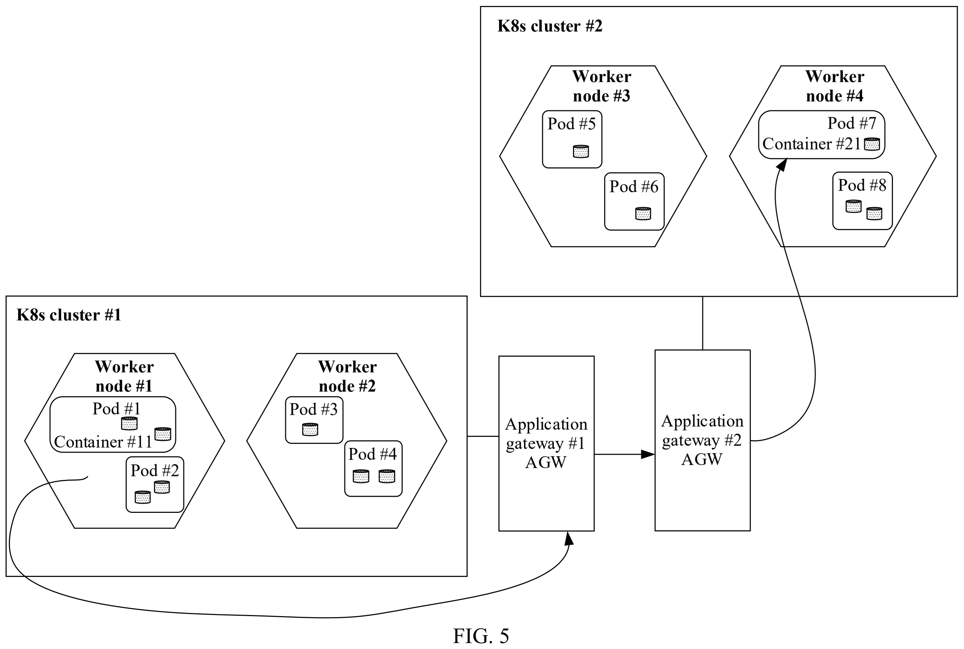

FIG. 5 is a diagram of service access performed by a client. As shown in FIG. 5, a client in a K8s cluster #1 sends a request message to an application gateway #2 through an application gateway #1, and the application gateway #2 routes the request message to a corresponding pod, to implement cross-cluster service access. It can be learned from FIG. 5 that, in the cross-K8s cluster service access method provided in this application, service access requests may be forwarded in a uniform manner to an application gateway (for example, the application gateway #1) corresponding to the K8s cluster, and the application gateway may perform load balancing or governance. In this application, the application gateway may provide, based on a received service access request, an IP address of a pod that is to be accessed and is used to provide a target service, encapsulate the service access request message (for example, by using a virtual extensible local area network (virtual eXtensible local area network, VXLAN)), and then send the encapsulated service access request message to an application gateway (for example, the application gateway #2) corresponding to a K8s cluster in which the target service is located. The application gateway performs routing only but does not perform load balancing. It may also be understood that load balancing needs to be performed only once on a data plane, to avoid a problem of a load imbalance caused by a plurality of times of load balancing.

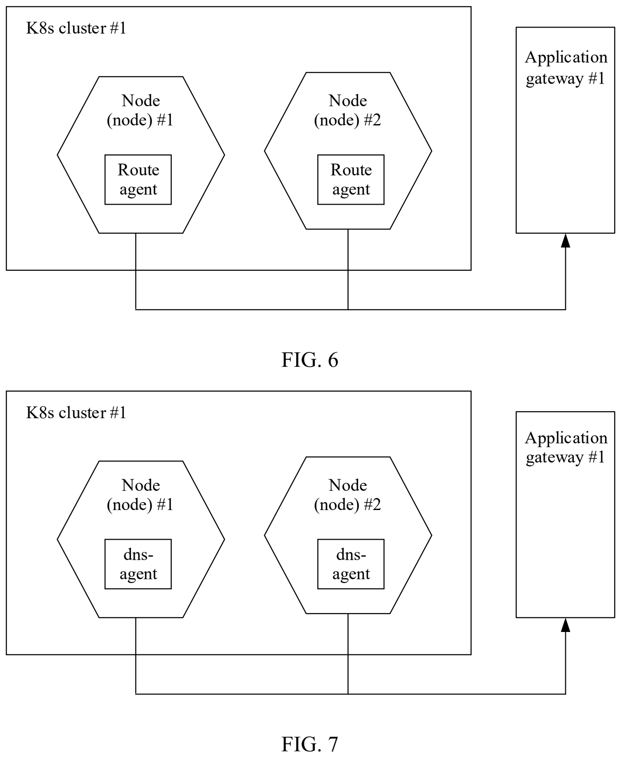

It can be learned from the foregoing description that, in this application, two functions are newly extended in each tenant K8s cluster, and one of the newly added functions is that a service access request of the client may be forwarded to the application gateway corresponding to the cluster. For example, this function may be implemented through an agent component in the K8s cluster. As shown in FIG. 6, the agent component may be a route agent (route agent) component in the figure. The route agent may also monitor a service and a pod of another K8s cluster, and forward a service access request to the application gateway. For another example, this function may be implemented through a standard application programming interface API of the K8s cluster. For example, no additional agent component needs to be deployed to implement this function for a specific K8s cluster as long as the API is implemented by the specific K8s cluster. Customized resource definitions (custom resource definitions, CRDs) of the API are as follows: "destinations" represents a destination network segment list; and "next-hop" represents next-hop information. These may all be understood as attributes included in a route forwarding CRD. The other new function is that automatic service discovery and automatic domain name resolution are implemented. In this application, the services for cross-cluster access need to be automatically injected into the K8s clusters of the tenant, to implement automatic service access. For example, this function may be implemented through the extended component. For another example, a service domain name of another site may be resolved through an agent component. As shown in FIG. 7, the agent component may be a domain name system (domain name system, DNS) agent in FIG. 7.

For example, the application gateways in this application may be gateways in a centralized manner, for example, may be deployed in advance. For example, the application gateway may be deployed in a virtual private cloud (virtual private cloud, VPC) in the cloud, or may be deployed in a conventional data center, or may be deployed in a VPC in the cloud service system. For example, the K8s cluster of the tenant may also be deployed in the VPC. Automatic network connection between the VPC where the application gateway resides and the VPC where the K8s of the tenant resides is implemented. The local controller implements PVC network connection. For another example, the application gateway may be deployed in a conventional data center, and the K8s cluster of the tenant may also be deployed in the conventional data center. Connection between a network of the application gateway and a K8s network of the tenant may be implemented through physical network pre-configuration.

After the application gateways are deployed, the application gateways may be managed through a control plane. Each resource pool has a corresponding application gateway. After the application gateways are deployed in a centralized manner and the tenant K8s clusters in the resource pools are added to the cluster group, the control plane performs scheduling. For example, the mapping relationship between the cluster and the application gateway may be configured. Then, cross-cluster service access requests in the tenant K8s cluster may be forwarded to a corresponding application gateway in a uniform manner.

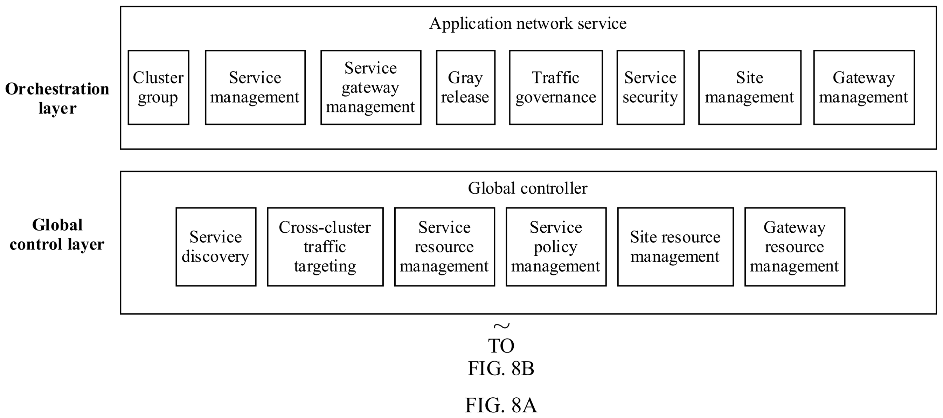

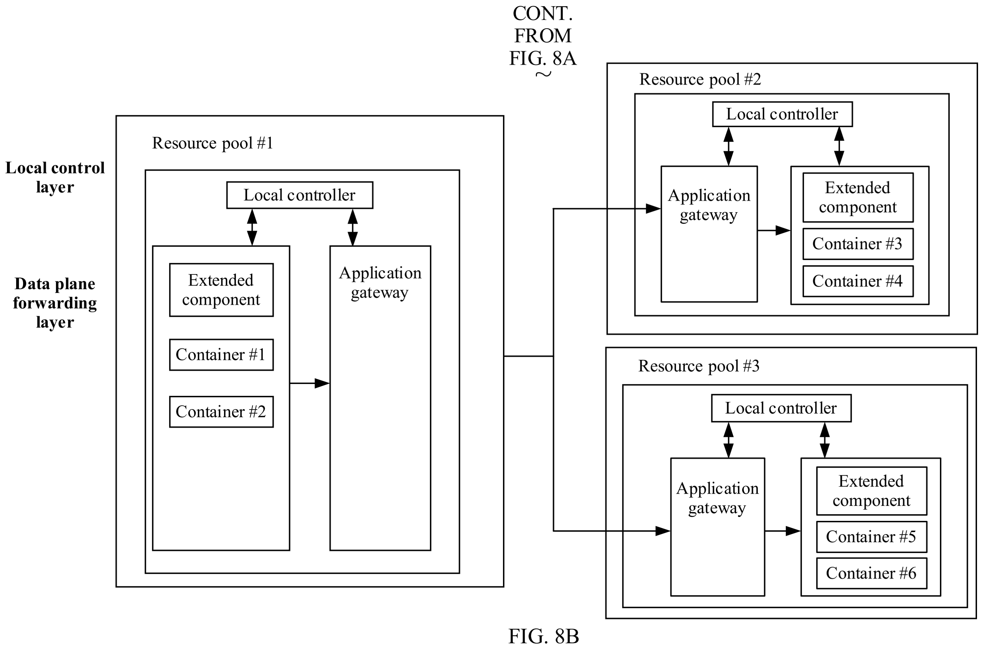

According to the foregoing description, FIG. 8A and FIG. 8B are diagrams of a system architecture to which this application is applicable. As shown in FIG. 8A and FIG. 8B, the system architecture is sequentially divided into an orchestration layer, a global control layer, a local control layer, and a data plane forwarding layer from top to bottom. The orchestration layer provides a service-oriented console for a tenant to use automatic service discovery and automatic network interconnection functions during cross-K8s cluster service access. For example, the orchestration layer may be used for cluster group creation, service management, service gateway management, gray release, service traffic governance, service security, site management, and gateway management. The "global control layer", also referred to as a "global controller", distributes the tenant's configurations to local controllers when the tenant uses a cross-K8s cluster service. For example, the global controller may be used for service discovery, cross-cluster service access, service resource management, service policy management, site resource management, and gateway resource management. The "local control layer" may also be referred to as a "local controller" that may manage a K8s cluster in a site nearby. One local controller may manage one or more sites. The local controller receives configurations from the global controller, and delivers configuration information to the K8s cluster and an application gateway. In this application, the global control layer and the local control layer may separately perform management and control. The global control layer logically performs unified management. The local control layer performs management and control nearby, and is partially autonomous and highly reliable. The local control layer can be interconnected to the control plane of the tenant K8s and interconnected to the application gateway, thereby implementing connection to a data plane. The "data plane forwarding layer" is used to receive configurations of the local controller. It is responsible for forwarding service access requests across the K8s cluster, and includes traffic load balancing and other governance functions.

As described previously, in this application, a pod is an entity that provides a service. After a service access request is load-balanced by an application gateway, the service access request is finally forwarded to a pod. The pod may be elastically scaled, and the application gateway needs to be notified of a pod change (for example, a location of the pod has changed or a new pod is added), so that the application gateway correctly forwards the service access request to the pod. The pod is managed by the tenant K8s cluster, and the extended component (for example, operator) in the tenant K8s needs to reversely notify the local controller. The local controller then delivers routing information of the pod to the local application gateway to update the routing information, and notifies the global controller. The global controller sends the routing information to local controllers to which other clusters in the cluster group belong. Then the local controller indicates the application gateway to deliver the routing information of the pod.

Based on the foregoing solution, in this application, the tenant configures the created cluster group, and the gateway may send the third configuration information to each application gateway, so that when receiving the service access request of the client in the first cluster, the first application gateway may directly forward, based on the obtained third configuration information, the service access request to an application gateway corresponding to another cluster, thereby ensuring that the tenant can access a service in the another cluster. In this application, automatic service access between different clusters can be implemented, that is, automatic network connection between the clusters is implemented. In comparison with a manner in which a tenant statically and manually configures a network, this manner is more convenient, improves service experience of a user, and avoids using a sidecar to implement cross-cluster service access, thereby facilitating management and reducing management costs.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

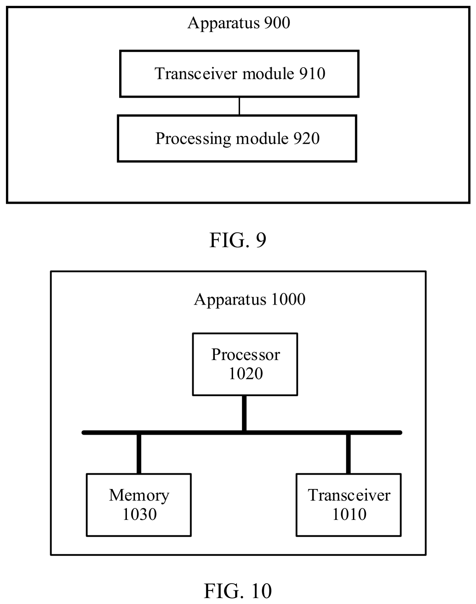

FIG. 9 is a block diagram of an apparatus 900 according to an embodiment of this application. As shown in the figure, theapparatus 900 may include a transceiver module 910 and a processing module 920.

The modules are separately configured to perform steps of the foregoing method. Details are not described herein again.

It should be further understood that the apparatus 900 herein is embodied in a form of functional units. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 900 in each of the foregoing solutions has a function of implementing corresponding steps in the method 300. The function may be implemented by hardware, or may be implemented by hardware executing corresponding software. The hardware or software includes one or more modules corresponding to the foregoing functions. For example, the transceiver module may be replaced with a processor, to separately perform receiving and sending operations and related processing operations in the method embodiments. In addition, the processing module may be a processing circuit.

In a possible implementation, the apparatus 900 may be an apparatus that is in the method 300 and that is applied to a cloud management platform, and the apparatus is configured to perform actions in the method 300.

In another possible implementation, the apparatus 900 may be a cloud management platform in the method 300, where the cloud management platform is configured to perform actions in the method 300.

It should be noted that the apparatus in FIG. 9 may be the cloud management platform (or an apparatus in the cloud management platform) in the foregoing method embodiments, or may be a chip or a chip system corresponding to the cloud management platform (or an apparatus in the cloud management platform), for example, a system on chip (system on chip, SoC). The processing module is a processor, a microprocessor, or an integrated circuit integrated on the chip. This is not limited herein.

FIG. 10 is a block diagram of another apparatus 1000 according to an embodiment of this application. As shown in the figure, the apparatus 1000 includes at least one processor 1020. The processor 1020 is coupled to a memory, and is configured to execute instructions stored in the memory, to transmit a signal and/or receive a signal. Optionally, the apparatus 1000 further includes the memory 1030, configured to store the instructions. Optionally, the apparatus 1000 further includes a transceiver 1010, and the processor 1020 controls the transceiver 1010 to send a signal and/or receive a signal.

It should be understood that the processor 1020 and the memory 1030 may be integrated into one processing apparatus, and the processor 1020 is configured to execute program code stored in the memory 1030 to implement the foregoing functions. During specific implementation, the memory 1030 may alternatively be integrated into the processor 1020, or may be independent of the processor 1020.

It should be further understood that the transceiver 1010 may include a receiver (or referred to as a receiving machine) and a transmitter (or referred to as a transmitting machine). The transceiver may further include an antenna, and there may be one or more antennas. The transceiver 1010 may alternatively be a communication interface or an interface circuit.

Specifically, the processor 1020 in the apparatus 1000 may correspond to the processing module 920 in the apparatus 900. The transceiver 1010 in the apparatus 1000 may correspond to the transceiver module 910 in the apparatus 900.

In a solution, the apparatus 1000 is configured to implement steps corresponding to an apparatus that is in the embodiment of the method 300 and that is applied to the cloud management platform. In another solution, the apparatus 1000 is configured to implement steps corresponding to the cloud management platform in the embodiment of the method 300.

For example, the processor 1020 is configured to execute a computer program or instructions stored in the memory 1030, to implement the steps in the method 300.

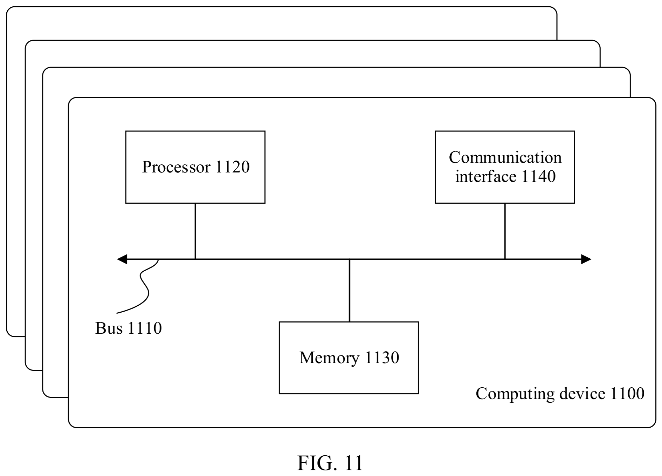

FIG. 11 is a diagram of an architecture of a computing apparatus cluster according to an embodiment of this application. The computing apparatus cluster includes at least one computing apparatus. The computing apparatus may be a server, for example, a central server, an edge server, or a local server in a local data center. In some embodiments, the computing apparatus may alternatively be a terminal apparatus, for example, a desktop computer, a notebook computer, or a smartphone. As shown in FIG. 11, the computing apparatus cluster includes at least one computing apparatus 1100. Memories 1130 in the one or more computing apparatuses 1100 in the computing apparatus cluster may store same instructions used for performing actions that are performed by the cloud management platform (or an apparatus in the cloud management platform) in the method 300.

In some possible implementations, alternatively, the memories 1130 in the one or more computing apparatuses 1100 in the computing apparatus cluster may separately store some of the instructions used for performing the actions that are performed by the cloud management platform (or an apparatus in the cloud management platform) in the method 300 described in the foregoing embodiment. In other words, a combination of one or more computing apparatuses 1100 may collectively execute the instructions used for performing the actions that are performed by the cloud management platform (or an apparatus in the cloud management platform) described in the foregoing embodiment.

It should be noted that the memories 1130 in different computing apparatuses 1100 in the computing apparatus cluster may store different instructions, which are separately used to perform some functions of the computing apparatus 1100. In other words, the instructions stored in the memories 1130 in different computing apparatuses 1100 may implement functions of one or more of the transceiver module 910 and the processing module 920.

Alternatively, the memories 1130 in different computing apparatuses 1100 in the computing apparatus cluster may store different instructions, which are separately used to perform some functions of the cloud management platform (or an apparatus in the cloud management platform) corresponding to the apparatus 900 or the apparatus 1000. In other words, the instructions stored in the memories 1130 in different computing apparatuses 1100 may implement functions of one or more of the transceiver module 910 and the processing module 920.

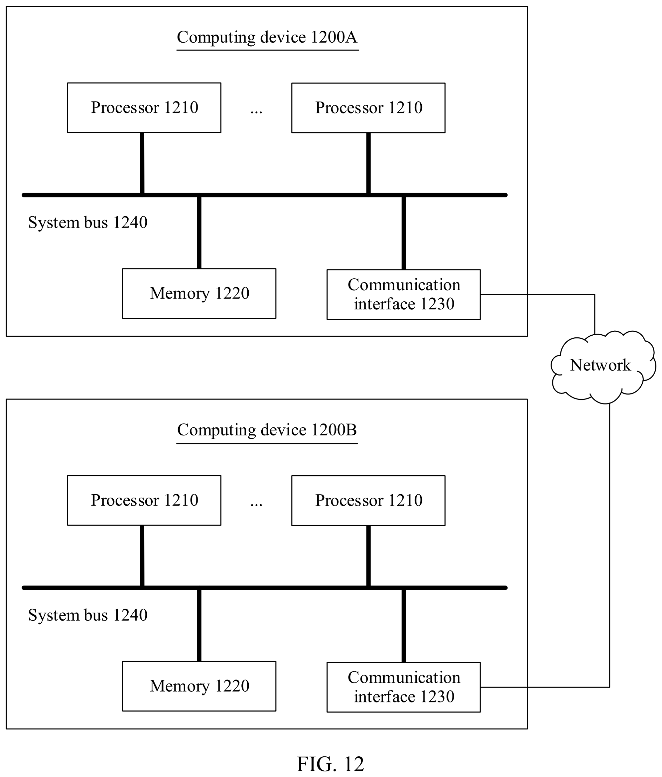

In some possible implementations, the one or more computing apparatuses in the computing apparatus cluster may be connected through a network. The network may be a wide area network, a local area network, or the like. FIG. 12 shows a possible implementation. As shown in FIG. 12, two computing apparatuses 1200A and 1200B are connected through a network. Specifically, each computing apparatus is connected to the network via a communication interface in the computing apparatus.

It should be understood that functions of the computing apparatus 1200A shown in FIG. 12 may alternatively be completed by a plurality of computing apparatuses 1100. Similarly, functions of the computing apparatus 1200B may alternatively be implemented by a plurality of computing apparatuses 1100.

An embodiment further provides a computer program product including instructions. The computer program product may be software or a program product that includes the instructions and can be run on a computing apparatus cluster or can be stored in any usable medium. When the computer program product is run by the computing apparatus cluster, the computing apparatus cluster is enabled to perform the foregoing method, or the computing apparatus cluster is enabled to implement functions of the foregoing apparatus.

An embodiment further provides a computer-readable storage medium. The computer-readable storage medium may be any usable medium that can be stored by a computing apparatus, or a data storage apparatus including one or more usable media, for example, a data center. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like. The computer-readable storage medium includes instructions. When the instructions in the computer-readable storage medium are executed on the computing apparatus, the computing apparatus is enabled to perform the foregoing method.

An embodiment further provides a computer-readable storage medium. The computer-readable storage medium may be any usable medium that can be stored by a computing apparatus, or a data storage apparatus including one or more usable media, for example, a data center. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by a computing apparatus cluster, the computing apparatus cluster is enabled to perform the foregoing method.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented electronically, mechanically, or in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes a plurality of instructions for instructing a computer apparatus (which may be a personal computer, a server, a network apparatus, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for cross-cluster service access, wherein the method is applied to a cloud management platform in a cloud service system, the cloud service system comprises a plurality of clusters, each cluster at least comprises a client and at least one worker node, each worker node comprises at least one pod, each pod is configured to provide a service, and the method comprises:
receiving first configuration information from a tenant, wherein the first configuration information indicates to create a cluster group for the plurality of clusters;
creating the cluster group based on the first configuration information, wherein the cluster group comprises the plurality of clusters;
receiving second configuration information from the tenant, wherein the second configuration information indicates to create a gateway in the cluster group;
creating the gateway in the cluster group based on the second configuration information;
receiving third configuration information from the tenant, wherein the third configuration information comprises: a first mapping relationship between a service name corresponding to a service comprised in each cluster and a corresponding access address, a second mapping relationship between the service name corresponding to the service comprised in each cluster and corresponding cluster information, and a third mapping relationship between each cluster and an application gateway corresponding to each cluster, wherein the cluster information determines the cluster; and
configuring the third configuration information to the gateway, wherein the gateway is configured to send the third configuration information to the application gateway corresponding to each cluster, and the application gateway is configured to perform service access based on a request message of the client and the third configuration information.

2. The method according to claim 1, wherein the access address corresponding to the service comprises one or more of the following: a domain name corresponding to the service, a uniform resource locator URL corresponding to the service, and an Internet Protocol IP address corresponding to the service.

3. The method according to claim 1 or 2, wherein the cluster information comprises: a name of the cluster, a name of the worker node in the cluster, and a name of the pod on the worker node.

4. The method according to any one of claims 1 to 3, wherein the plurality of clusters comprise a first cluster and a second cluster, the first cluster comprises a first client, the first cluster is associated with a first application gateway, and the method further comprises:
obtaining, by the first client, a first IP address corresponding to a first domain name;
sending, by the first client, a first request message to the first application gateway, wherein the first request message carries the first IP address, and the first request message is used to request to access the first IP address;
determining, by the first application gateway based on the first request message and the first mapping relationship, that a service identifier corresponding to the first IP address is a first identifier, determining, based on the second mapping relationship, that the first identifier is an identifier corresponding to a service in the second cluster, and determining, based on the third mapping relationship, that the second cluster is associated with a second application gateway; and
sending, by the first application gateway, the first request message to the second application gateway.

5. The method according to claim 4, wherein the method further comprises:
sending, by the gateway, the third configuration information to the first application gateway and the second application gateway.

6. The method according to claim 5, wherein the method further comprises:
determining, by the second application gateway based on the first IP address carried in the first request message and the first mapping relationship, that the service identifier corresponding to the first IP address is the first identifier, and determining, based on the second mapping relationship, that the first identifier corresponds to a second pod in a second worker node in the second cluster; and
sending, by the second application gateway, a second request message to the second pod, wherein the second request message is used to request to access the service corresponding to the first identifier.

7. The method according to any one of claims 4 to 6, wherein the first cluster further comprises a first module, a fourth mapping relationship between the domain name and the IP address is configured on the first module, and the first module is configured to perform domain name resolution; and
obtaining, by the first client, the first IP address corresponding to the first domain name comprises:
sending, by the first client, a third request message to the first module, wherein the third request message carries the first domain name, and the third request message is used to request to obtain an Internet Protocol IP address corresponding to the first domain name; and
receiving, by the first client, a first response message from the first module, wherein the first response message carries the first IP address, and the first IP address is determined by the first module.

8. An apparatus, wherein the apparatus is applied to a cloud management platform in a cloud service system, the cloud service system comprises a plurality of clusters, each cluster at least comprises a client and at least one worker node, each worker node comprises at least one pod, each pod is configured to provide a service, and the apparatus comprises a transceiver module and a processing module;
the transceiver module is configured to receive first configuration information from a tenant, wherein the first configuration information indicates to create a cluster group for the plurality of clusters;
the processing module is configured to create the cluster group based on the first configuration information, wherein the cluster group comprises the plurality of clusters;
the transceiver module is configured to receive second configuration information from the tenant, wherein the second configuration information indicates to create a gateway in the cluster group;
the processing module is configured to create the gateway in the cluster group based on the second configuration information;
the transceiver module is configured to receive third configuration information from the tenant, wherein the third configuration information comprises: a first mapping relationship between a service name corresponding to a service comprised in each cluster and a corresponding access address, a second mapping relationship between the service name corresponding to the service comprised in each cluster and corresponding cluster information, and a third mapping relationship between each cluster and an application gateway corresponding to each cluster, wherein the cluster information determines the cluster; and
the processing module is configured to configure the third configuration information to the gateway, wherein the gateway is configured to send the third configuration information to the application gateway corresponding to each cluster, and the application gateway is configured to perform service access based on a request message of the client and the third configuration information.

9. The apparatus according to claim 8, wherein the access address corresponding to the service comprises one or more of the following: a domain name corresponding to the service, a uniform resource locator URL corresponding to the service, and an Internet Protocol IP address corresponding to the service.

10. The apparatus according to claim 8 or 9, wherein the cluster information comprises: a name of the cluster, a name of the worker node in the cluster, and a name of the pod on the worker node.

11. The apparatus according to any one of claims 8 to 10, wherein the plurality of clusters comprise a first cluster and a second cluster, the first cluster comprises a first client, and the first cluster is associated with a first application gateway;
the first client is configured to obtain a first IP address corresponding to a first domain name;
the first client is configured to send a first request message to the first application gateway, wherein the first request message carries the first IP address, and the first request message is used to request to access the first IP address;
the first application gateway is configured to: determine, based on the first request message and the first mapping relationship, that a service identifier corresponding to the first IP address is a first identifier, determine, based on the second mapping relationship, that the first identifier is an identifier corresponding to a service in the second cluster, and determine, based on the third mapping relationship, that the second cluster is associated with a second application gateway; and
the first application gateway is configured to send the first request message to the second application gateway.

12. The apparatus according to claim 11, wherein
the gateway is configured to send the third configuration information to the first application gateway and the second application gateway.

13. The apparatus according to claim 12, wherein
the second application gateway is configured to: determine, based on the first IP address carried in the first request message and the first mapping relationship, that the service identifier corresponding to the first IP address is the first identifier, and determine, based on the second mapping relationship, that the first identifier corresponds to a second pod in a second worker node in the second cluster; and
the second application gateway is configured to send a second request message to the second pod, wherein the second request message is used to request to access the service corresponding to the first identifier.

14. The apparatus according to any one of claims 11 to 13, wherein the first cluster further comprises a first module, a fourth mapping relationship between the domain name and the IP address is configured on the first module, and the first module is configured to perform domain name resolution; and
that the first client is configured to obtain the first IP address corresponding to the first domain name comprises:
the first client is configured to send a third request message to the first module, wherein the third request message carries the first domain name, and the third request message is used to request to obtain an Internet Protocol IP address corresponding to the first domain name; and
the first client is configured to receive a first response message from the first module, wherein the first response message carries the first IP address, and the first IP address is determined by the first module.

15. A computing apparatus, comprising a processor and a memory, wherein the processor runs instructions in the memory, so that the processor performs the method according to any one of claims 1 to 7.

16. A computing apparatus cluster, comprising at least one computing apparatus, wherein each computing apparatus comprises a processor and a memory; and
the processor of the at least one computing apparatus is configured to execute instructions stored in the memory of the at least one computing apparatus, so that the computing apparatus cluster performs the method according to any one of claims 1 to 7.

17. A computer program product comprising instructions, wherein when the instructions are run by a computing apparatus cluster, the computing apparatus cluster is enabled to perform the method according to any one of claims 1 to 7.

18. A computer-readable storage medium, comprising computer program instructions, wherein when the computer program instructions are executed by a computing apparatus cluster, the computing apparatus cluster performs the method according to any one of claims 1 to 7.
